# EUROPÄISCHE PATENTSCHRIFT

(11) **EP 3 218 622 B1**
(45) Veröffentlichungstag und Bekanntmachung des Hinweises auf die Patenterteilung: **03.03.2021**
(21) Anmeldenummer: 15775741.0
(22) Anmeldetag: 12.10.2015
(51) Int. Cl.: F16H 59/10, G05G 9/047, F16H 59/04, F16H 59/02

(54) **KOPPLUNGSVORRICHTUNG FÜR EINEN SCHALTHEBEL, SCHALTHEBELVORRICHTUNG UND VERFAHREN ZUM HERSTELLEN EINER KOPPLUNGSVORRICHTUNG**
COUPLING DEVICE FOR A GEARSHIFT LEVER, GEARSHIFT LEVER DEVICE, AND METHOD FOR PRODUCING A COUPLING DEVICE
DISPOSITIF D'ACCOUPLEMENT POUR LEVIER DE CHANGEMENT DE VITESSE, DISPOSITIF DE LEVIER DE CHANGEMENT DE VITESSE ET PROCÉDÉ PERMETTANT DE FABRIQUER UN DISPOSITIF D'ACCOUPLEMENT

(30) Priorität: 12.11.2014 DE 102014223046
(43) Veröffentlichungstag der Anmeldung: 20.09.2017
(73) Patentinhaber: ZF Friedrichshafen AG, 88046 Friedrichshafen (DE)
(72) Erfinder: HESSEL, Alex, 49448 Lemförde (DE)
(74) Vertreter: ZF Friedrichshafen AG
(86) Internationale Anmeldenummer: PCT/EP2015/073498
(87) Internationale Veröffentlichungsnummer: WO 2016/074868

(56) Entgegenhaltungen:
- EP-A1- 0 731 293
- DE-A1-102006 028 228
- US-A1- 2004 035 237

## Beschreibung

Die vorliegende Erfindung betrifft eine Kopplungsvorrichtung für einen Schalthebel einer Schalthebelvorrichtung eines Kraftfahrzeuges, eine Kraftfahrzeug-Schalthebelvorrichtung und ein Verfahren zum Herstellen einer Kopplungsvorrichtung.

Schalthebelvorrichtungen kommen beispielsweise in Kraftfahrzeugen in wenigstens zweierlei Hinsicht zur Anwendung. Beispielsweise kann die Schalthebelvorrichtung eine Wählhebelvorrichtung ausbilden, welche einen als Wählhebel ausgebildeten Schalthebel aufweist, der zwischen verschiedenen Stellungen bewegbar ist, wobei jeder auswählbaren Stellung eine Fahrstufe eines mit der Wählhebelvorrichtung gekoppelten Gangwechselgetriebes zugeordnet ist. Bei Auswahl einer Fahrstufe durch Bewegen des Wählhebels in die zugeordnete Wählhebelstellung wird in dem Gangwechselgetriebe über eine zwischen der Wählhebelvorrichtung und dem Gangwechselgetriebe bestehende mechanische oder elektronische Verbindung ein der ausgewählten Fahrstufe entsprechender Gang eingelegt. Des Weiteren kann eine Schalthebelvorrichtung in der Art eines Lenkstockschalters in einem Kraftfahrzeug Anwendung finden. Die Schalthebelvorrichtung weist dabei einen als Lenkstockschalthebel ausgebildeten Schalthebel auf, welcher in unterschiedliche Schalthebelstellungen bewegbar ist, wobei jeder Schalthebelstellung eine vorbestimmte Funktion zugeordnet ist. Beispielsweise kann diese Funktion eine Auswahl einer Fahrstufe eines Gangwechselgetriebes, die Bedienung einer Scheibenwischwaschanlage oder einer Lichtanlage, insbesondere zur Auswahl eines Blinkers und/oder eines Fernlichts, oder ähnliches sein.

Den beispielhaft beschriebenen Schalthebelvorrichtungen ist gemein, dass die jeweiligen Schalthebel in wenigstens zwei zueinander parallel verlaufenden Schaltgassen bewegbar sein können, welche durch eine Verbindungsgasse miteinander verbunden sind. Dabei können die jeweiligen Schalthebel mit einer Kopplungsvorrichtung gekoppelt sein, welche den Schalthebel beispielsweise mit einer Positionserfassungsvorrichtung zum Erfassen der Positionen des Schalthebels koppelt.

Die Druckschriften DE 102 31 015 A1 und DE 698 14 095 T2 offenbaren jeweils eine solche Kopplungsvorrichtung für einen Kraftfahrzeug-Schalthebel. Die Kopplungsvorrichtung koppelt den Kraftfahrzeug-Schalthebel mit einer Positionserfassungseinrichtung, mittels welcher vorbestimmte Schalthebelpositionen erfasst und ein der jeweiligen erfassten Position entsprechendes Positionssignal ausgegeben wird. Eine Kopplungsvorrichtung mit den Merkmalen des Oberbegriffs des Anspruchs 1 ist aus der EP 0 731 293 A1 bekannt.

Vor diesem Hintergrund schafft die vorliegende Erfindung eine verbesserte Kopplungsvorrichtung für einen Schalthebel, eine verbesserte Schalthebelvorrichtung und ein verbessertes Verfahren zum Herstellen einer Kopplungsvorrichtung. Vorteilhafte Ausgestaltungen ergeben sich aus den Unteransprüchen und der nachfolgenden Beschreibung.

Gemäß Ausführungsformen der vorliegenden Erfindung kann insbesondere eine Kopplungsvorrichtung für einen Kraftfahrzeug-Schalthebel realisiert werden, welche konstruktiv einfach mit einer geringeren Anzahl an Teilen aufgebaut ist und somit eine kürzere Toleranzkette aufweist sowie kostengünstig ist.

Die vorgeschlagene Kopplungsvorrichtung umfasst ein bewegbares Schiebeelement mit einer Aufnahme zum Aufnehmen eines Abschnitts eines Schalthebels. Bei dem Schalthebel kann es sich beispielsweise um einen Schalthebel einer Kraftfahrzeug-Schalthebelvorrichtung handeln. Insbesondere kann es sich bei dem Schalthebel um einen Wählhebel zur Auswahl von Fahrstufen eines Gangwechselgetriebes eines Kraftfahrzeuges handeln. Bei den Fahrstufen kann es sich beispielsweise um Gangwahlstufen für einen Vorwärtsfahrbetrieb und/oder für einen Rückwärtsfahrbetrieb und/oder um eine Parksperrenstufe des Kraftfahrzeuges handeln, bei welcher eine Parksperre in dem Gangwechselgetriebe aktiviert wird.

Bei dem Schiebeelement kann es sich im Allgemeinen um eine Komponente handeln, welche relativ zu einer damit gekoppelten bzw. in Wirkzusammenhang stehenden Komponente bewegbar ist. Das Schiebeelement zeichnet sich vorzugsweise dadurch aus, dass dieses mittels einer Kopplung mit dem Schalthebel durch Übertragung einer auf den Schalthebel einwirkenden Bewegungskraft auf das Schiebeelement mitbewegbar bzw. zwangsbewegbar ist. Die Kopplung erfolgt hierbei mittels einer Aufnahme, welche einen Abschnitt des Schalthebels zum gemeinsamen Bewegen des Schalthebels und des Schiebeelements aufnehmen kann. In einem den Abschnitt des Schalthebels aufnehmenden Zustand kann das Schiebeelement bei Betätigung des Schalthebels somit mit dem Schalthebel mitgeführt bzw. mitbewegt werden. Bei dem Abschnitt des Schalthebels kann es sich um einen Mittenabschnitt handeln, welches zwischen zwei freien Enden des Schalthebels angeordnet ist. Alternativ dazu kann es sich bei dem Abschnitt um ein freies Ende des Schalthebels handeln. Auf weitere Einrichtungen oder Komponenten zum Initiieren einer Bewegung des Schiebeelementes können somit verzichtet werden. Optional kann allerdings wenigstens eine Einrichtung oder Komponente vorgesehen sein, welche mit dem Schiebeelement gekoppelt ist, eine Bewegungskraft auf das Schiebeelement zum Bewegen des Schiebeelements einzubringen, beispielsweise um ein Rückstellen des Schalthebels über eine auf das Schiebeelement einwirkende Bewegungskraft zu ermöglichen.

Die Kopplungsvorrichtung umfasst des Weiteren eine Führung zum Führen einer zweidimensionalen Bewegung des Schiebeelementes. Eine zweidimensionale Bewegung liegt insbesondere dann vor, wenn das Schiebeelement entlang einer ersten Bewegungsachse und entlang einer zweiten Bewegungsachse bewegbar ist, wobei die erste und zweite Bewegungsachse unterschiedlich zueinander verlaufen. Die erste und zweite Bewegungsachse weisen insbesondere wenigstens einen gemeinsamen Kreuzungspunkt auf. Beispielsweise bilden die erste und zweite Bewegungsachse ein ebenes, also zweidimensionales, kartesisches Koordinatensystem aus, wobei die erste und zweite Bewegungsachse die jeweiligen Richtungsachsen des Koordinatensystems definieren. Das Schiebeelement ist somit in der dadurch aufgespannten Achsenebene bewegbar. Die Führung bildet dabei vorzugsweise eine mit Blick auf das Schiebelement ortsfeste Einrichtung oder Komponente aus. Mit anderen Worten ist die Führung im Gegensatz zu dem Schiebeelement unbeweglich angeordnet vorgesehen. Die Führung weist wenigstens ein Führungselement auf, mit welchem das Schiebeelement in Eingriff steht. Bei dem wenigstens einen Führungselement handelt es sich vorzugsweise um eine Komponente, welche ausgebildet ist, eine form- und/oder kraftschlüssige Verbindung mit dem Schiebeelement eingehen zu können, wobei die eingehbare form- und/oder kraftschlüssige Verbindung eine Relativbewegung zwischen der Führung bzw. dem wenigstens einen Führungselement und dem Schiebeelement basierend auf einer Bewegung des Schiebeelements zulässt.

Die Kopplungsvorrichtung nach der vorliegenden Erfindung zeichnet sich dadurch aus, dass das Schiebeelement in dem Eingriffszustand mit dem Führungselement entlang zweier zueinander unterschiedlicher Bewegungsachsen zu dem wenigstens einen Führungselement bewegbar ist. Insbesondere weist das Schiebeelement ein Gegeneingriffselement auf, welches in Eingriff mit dem wenigstens einen Führungselement steht. Das Führungselement formt entsprechend ein Eingriffselement aus. Das Gegeneingriffselement des Schiebeelementes ist damit in dem Eingriffszustand entlang der beiden zueinander unterschiedlichen Bewegungsachsen zu dem wenigstens einen Führungselement bewegbar. Besonders bevorzugt kann das wenigstens eine Führungselement eine Komponente, ausgewählt aus einer Nut und einer Feder einer Nut-Feder-Verbindung, ausbilden und das Schiebeelement die andere Komponente, ausgewählt aus der Nut und der Feder der Nut-Feder-Verbindung, ausbilden oder aufweisen. Eine Nut-Feder-Verbindung zeichnet sich dadurch aus, dass sich die Nut und die Feder in wenigstens einem Querschnittsabschnitt der Nut-Feder-Verbindung oder alternativ in einem gesamten Querschnittsbereich der Nut-Feder-Verbindung einander überlappen. Vorzugsweise bildet die Nut querschnittlich einen Aufnahmeraum aus, in welchem ein freies Ende der Feder hineinragt. Beispielsweise kann die Nut querschnittlich L-, C-, U-, V-, W-förmig oder ähnlich ausgebildet sein. Weiterhin bevorzugt bildet das wenigstens eine Führungselement wenigstens die Nut der Nut-Feder-Verbindung aus, während das Schiebeelement wenigstens die Feder aufweist oder ausbildet, welche in die Nut eingreifbar ist oder eingreift. Dadurch kann das Schiebeelement hinsichtlich seiner Materialstärke über seinen Gesamtquerschnitt schmal bzw. dünn ausgebildet werden. Alternativ bevorzugt bilden jeweils das Führungselement und das Schiebeelement wenigstens einen Nut-Feder-Abschnitt aus wenigstens einer Nut und einer dazu benachbarten Feder aus, wobei die Feder des Schiebeelements ausgebildet ist, in die zugeordnete Nut des Führungselementes einzugreifen, und wobei die Feder des Führungselementes ausgebildet ist, in die zugeordnete Nut des Schiebeelementes einzugreifen. Eine solche Nut-Feder-Verbindung kann beispielsweise dadurch ermöglicht werden, dass der wenigstens eine jeweilige Nut-Feder-Abschnitt des Schiebeelements und des Führungselementes querschnittlich L-, C-, U-, V-, W-förmig oder ähnlich ausgebildet sind. Dadurch kann eine zuverlässigere Führung für das Schiebeelement bereitgestellt werden.

Eine zweidimensionale Beweglichkeit des Schiebeelements kann insbesondere dadurch realisiert werden, dass der zwischen den wenigstens zwei Komponenten, also dem Führungselement und dem Schiebeelement, bzw. zwischen den wenigstens zwei Elementen, also dem Eingriffselement und dem Gegeneingriffselement, bestehende Eingriff entlang jeder der beiden Bewegungsachsen in wenigstens einer Stellung des Schiebeelementes einen Abstand zwischen den wenigstens zwei Komponenten bzw. Elementen ausbildet, welcher mittels der relativen Beweglichkeit dieser Teile zueinander verringerbar oder vergrößerbar ist. Eine solche Stellung kann beispielsweise eine Endstellung für das Schiebeelement definieren, bei welcher die Elemente bzw. Komponenten in dem Eingriffszustand entlang einer der beiden Bewegungsachsen einen vorbestimmten Abstand aufweisen, welcher aufgrund einer Bewegung des Schiebeelementes entlang der einen der beiden Bewegungsachsen aus der Endstellung heraus verringerbar ist. Die Verringerung kann insbesondere bis zu einer gegenseitigen Anlage der entsprechenden Elemente bzw. Komponenten erfolgen. Alternativ oder zusätzlich kann die Stellung eine Endstellung für das Schiebeelement definieren, bei welcher sich die entsprechenden Komponenten bzw. Elemente in dem Eingriffszustand entlang einer der beiden Bewegungsachsen in gegenseitiger Anlage befinden, wobei aufgrund einer Bewegung des Schiebeelementes entlang der einen der beiden Bewegungsachsen aus der Endstellung heraus unter Beibehaltung des Eingriffszustandes ein mit der Bewegung einhergehender zunehmender Abstand zwischen den entsprechenden Komponenten bzw. Elementen ausbildbar ist. Des Weiteren kann eine solche Stellung eine Mittenstellung für das Schiebeelement entlang wenigstens einer der beiden Bewegungsachsen definieren, bei welcher die entsprechenden Komponenten bzw. Elemente in dem Eingriffszustand entlang der einen der beiden Bewegungsachsen einen vorbestimmten Abstand zueinander aufweisen, welcher aufgrund einer Bewegung des Schiebeelementes entlang der einen der beiden Bewegungsachsen aus der Mittenstellung heraus mittels einer Bewegung in eine erste Richtung verringerbar und mittels einer Bewegung in eine zweite Richtung, welche zu der ersten Richtung entgegengesetzt ist, vergrößerbar ist. Weiter bevorzugt definiert die Stellung eine Mittenstellung für das Schiebeelement entlang der beiden Bewegungsachsen in entsprechender vorstehend beschriebener Weise.

Die zwei zueinander unterschiedlichen Bewegungsachsen definieren somit eine Bewegungsebene für die Bewegungen des Schiebeelementes, wobei die Bewegungsebene nach einer bevorzugten Ausführungsform planar, mit anderen Worten nichtgekrümmt, ist. Eine planare Bewegungsebene eignet sich insbesondere für eine mit der Kopplungsvorrichtung ausführbare Erfassung einer Position des Schalthebels. Beispielsweise kann das Schiebeelement der Kopplungsvorrichtung wenigstens ein signalgebendes Element aufweisen, dessen abgebbares Signal von einem Signalempfänger erfassbar ist, wobei das wenigstens eine signalgebende Element und der zugeordnete Signalempfänger Bestandteile einer Positionserfassungseinrichtung zum Erfassen einer Position des Schalthebels ausbilden können. Eine Erfassung der Schalthebelposition kann somit auf konstruktiv einfache Weise realisiert werden. Vorzugsweise erstrecken sich die zwei zueinander unterschiedlichen Bewegungsachsen orthogonal zueinander. Die erste und zweite Bewegungsachse bilden somit ein ebenes, zweidimensionales kartesischen Koordinatensystem aus, welches eine Bewegungsebene für das Schiebeelement definiert. Dadurch können Störeinflüsse beispielsweise bei einer mit der Kopplungsvorrichtung gekoppelten Positionserfassungsvorrichtung durch mögliche Signalüberlagerungen oder Signaldoppelungen weitestgehend minimiert werden.

Nach der Erfindung weist die Führung ein weiteres Führungselement auf, mit welchem das Schiebeelement in Eingriff steht, wobei das Führungselement und das weitere Führungselement zueinander gegenüberliegend unter Zwischenlage des Schiebeelementes angeordnet sind. Weiter bevorzugt umfasst das Schiebeelement neben dem Gegeneingriffselement zum Eingriff mit dem wenigstens einen Führungselement ein weiteres Gegeneingriffselement zum Eingriff mit dem weiteren Führungselement auf. Das Führungselement und das weitere Führungselement sind dabei zueinander gegenüberliegend unter Zwischenlage des Gegeneingriffselementes und des weiteren Gegeneingriffselementes angeordnet. Dadurch kann eine stabilere Führung für die Bewegungen des Schiebeelementes gewährleistet werden. Weiter bevorzugt weisen das Führungselement und das weitere Führungselement jeweils einen Stopp auf, welche sich entlang einer der beiden Bewegungsachsen zum Begrenzen der Bewegung des Schiebeelementes entlang dieser Bewegungsachse gegenüberliegen. Damit kann auf konstruktiv einfache Weise ein Ausmaß der Bewegung des Schiebeelementes entlang der entsprechenden Bewegungsachse begrenzt werden. In Verbindung mit dem Schalthebel kann somit des Weiteren ein Anschlag für eine Schalthebelbewegung bereitgestellt werden.

Nach einer bevorzugten Ausführungsform weist die Aufnahme ein Verdrehsicherungselement zum Eingriff mit einem Verdrehsicherungs-Gegenelement des Schalthebels auf. Vorzugsweise ist das Verdrehsicherungselement durch eine in dem Schiebeelement im Bereich der Aufnahme ausgebildete Ausnehmung bzw. Aussparung ausgeformt. Die Ausnehmung bzw. Aussparung weist wenigstens eine zu einer Aufnahmemitte weisende Öffnung auf, über welche das Verdrehsicherungs-Gegenelement in die Ausnehmung bzw. Aussparung eingreifbar ist. Beispielsweise kann es sich bei dem Verdrehsicherungs-Gegenelement um einen federelastisch gelagerten Zapfen handeln, welcher entlang einer schräg zu einer Längserstreckungsachse des Schalthebels verlaufenden Bewegungsachse federelastisch hin und her bewegbar ist, wodurch der Zapfen in einer der Öffnung gegenüberliegenden Anordnung in die Öffnung einbringbar und ausbringbar is.

Weiter bevorzugt erstreckt sich die Bewegungsachse des Verdrehsicherungs-Gegenelements orthogonal zu der Längserstreckungsachse des Schalthebels. Das Verdrehsicherungs-Gegenelement mit seiner federelastischen Lagerung ist dabei vorzugsweise derart ausgebildet, dass das Verdrehsicherungs-Gegenelement beim Einbringen des Abschnitts des Schalthebels, welcher das Verdrehsicherungs-Gegenelement aufweist, in die Aufnahme des Schiebeelements den die wenigstens eine Öffnung der Ausnehmung bzw. Aussparung begrenzenden Umrandungen ausweichen und im Anschluss aufgrund seiner federelastischen Lagerung in die Ausnehmung bzw. Aussparung eingreifen kann. Bei den die wenigstens eine Öffnung begrenzenden Umrandungen kann es sich beispielsweise um einen Rand der Aufnahme des Schiebeelementes handeln.

Weiterhin bevorzugt erstreckt sich die wenigstens eine Öffnung der Ausnehmung bzw. Aussparung bis zu einer Oberflächenseite des Schiebeelementes, welche in eine Richtung zeigt, welche parallel zu der Längserstreckungsachse des Schalthebels bzw. parallel zu einer Aufnahmeachse, entlang welcher der Abschnitt des Schalthebels in die Aufnahme des Schiebeelementes einbringbar ist, verläuft. Die Ausnehmung bzw. Aussparung bildet dadurch einen Schacht in dem Schiebeelement aus, welcher sich von der Oberflächenseite entlang der Aufnahmeachse bis wenigstens zu einer vorbestimmten Tiefe des Schiebeelementes erstreckt. Eine solche Ausgestaltung der Aussparung bzw. Ausnehmung ist insbesondere vorteilhaft für ein Verdrehsicherungs-Gegenelement, welches von dem aufzunehmenden Abschnitt des Schalthebels vorsprungartig abragt. Beispielsweise kann das Verdrehsicherungs-Gegenelement einen Zapfen ausformen, welcher von dem Schalthebel abragt. Der Zapfen kann weiterhin bevorzugt einteilig mit einem den Schalthebel ausformenden Grundkörper ausgebildet sein. Ein Ausmaß der Ausnehmung bzw. Aussparung sowie des Verdrehsicherungs-Gegenelementes sind derart aneinander angepasst, dass das Verdrehsicherungs-Gegenelement in die Ausnehmung bzw. Aussparung eingreifen kann.

Alternativ dazu kann das Verdrehsicherungselement einen wie vorbeschriebenen Zapfen oder Vorsprung ausbilden, wobei das Verdrehsicherungs-Gegenelement eine in dem aufzunehmenden Abschnitt des Schalthebels ausgeformte Ausnehmung bzw. Aussparung ausformt.

Mittels des Eingriffs des Verdrehsicherungselementes mit dem Verdrehsicherungs-Gegenelement kann zuverlässig eine ungewollte Drehbewegung des Schiebeelementes um die Längserstreckungsachse des Schalthebels in einen den Abschnitt des Schalthebels aufnehmenden Zustand vermieden werden. Dadurch kann in dem Aufnahmezustand mit dem Schalthebel eine mögliche Verkantung des Schiebeelementes in der Führung verhindert werden, welche eine gewollte Bewegung des Schalthebels behindern könnte.

Weiter bevorzugt ist die Tiefe der Ausnehmung bzw. Aussparung in dem Schiebeelement derart gewählt, dass der Zapfen in einem Montagezustand des Schiebeelements mit dem Schalthebel um wenigstens eine Schwenkachse des Schalthebels in der schachtartigen Ausnehmung bzw. Aussparung frei, mit anderen Worten ungehindert rotierbar ist. Beispielsweise kann das Verdrehsicherungselement einen Durchlass ausformen, welcher sich parallel zu der Aufnahme, dabei das Schiebeelement durchquerend, erstreckt. Weiterhin bevorzugt ist der Zapfen um wenigstens zwei orthogonal zueinander stehende Schwenkachsen eines kardanisch gelagerten Schalthebels frei rotierbar. Weiterhin bevorzugt ist der Zapfen querschnittlich kreisförmig ausgestaltet. Dadurch können mögliche Verkantungen des mit der Führung in Eingriff stehenden Schiebeelements um entsprechende Achsen, welche orthogonal zu der Längserstreckungsachse des Schalthebels verlaufen, minimiert werden.

Nach einem weiteren Aspekt der vorliegenden Erfindung wird eine Schalthebelvorrichtung für ein Kraftfahrzeug vorgeschlagen, wobei die Schalthebelvorrichtung einen wenigstens zweidimensional bewegbar gelagerten Schalthebel umfasst. Der Schalthebel kann dabei in vorbekannter Weise beispielsweise mittels einer üblichen Kugelgelenklagerung oder kardanischen Lagerung zweidimensional bewegbar gelagert sein. Weiterhin umfasst die Schalthebelvorrichtung eine Kopplungsvorrichtung nach einer der vorstehend beschriebenen Ausführungsformen. Dabei ist ein Abschnitt des Schalthebels von der Aufnahme des Schiebeelementes aufgenommen, wobei die Aufnahme ausgebildet ist, eine entlang der jeweiligen Bewegungsachse gerichtete Bewegungskraft zwischen dem Schalthebel und dem Schiebeelement zu übertragen. Dadurch wird sichergestellt, dass das Schiebeelement bei einer Bewegung des Schalthebels mit dem Schalthebel mitführbar bzw. zwangsbewegbar ist. Weiterhin bevorzugt kann über eine Bewegung des Schiebeelementes der Schalthebel zwangsbewegbar sein. Dies ist insbesondere vorteilhaft für eine Rückstelleinrichtung des Schalthebels, welche beispielsweise vorgesehen sein kann, den Schalthebel in eine entsprechend einer tatsächlich in dem Gangwechselgetriebe eingelegten Fahrstufe zugeordnete Schalthebelstellung zu bewegen oder aus einer gewählten Schalthebelstellung in eine davon unterschiedliche Schalthebelstellung, insbesondere eine Ausgangsstellung des Schalthebels, insbesondere automatisch, rückzustellen. Eine solche Rückstellung kann beispielhaft mittels einer Aktuatoreinrichtung oder eine Federeinrichtung erfolgen, welche mit dem Schiebeelement koppelbar oder gekoppelt ist.

Gemäß einer bevorzugten Ausführungsform weist die Schalthebelvorrichtung ein Gehäuse auf, welches die Führung für das Schiebeelement ausbildet. Beispielsweise kann das Gehäuse zweiteilig ausgebildet sein, wobei wenigstens ein Gehäuseteil ein Führungselement der Führung ausformt. Das wenigstens eine Führungselement kann vorzugweise eine Nut oder eine Feder einer Nut-Feder-Verbindung wie beispielhaft vorstehend beschrieben ausformen. Zum einen kann dadurch die Kopplungsvorrichtung in einfacher Weise ausgestaltet und zum anderen kann die Schalthebelvorrichtung mit einer integrierten Kopplungsvorrichtung in wenigen Montageschritten zusammengesetzt werden.

Gemäß einer bevorzugten Ausführungsform weist der Schalthebel ein Verdrehsicherungs-Gegenelement auf, welches mit einem Verdrehsicherungselement des Schiebeelementes in Eingriff steht, wobei das Verdrehsicherungs-Gegenelement und das Verdrehsicherungselement durch wenigstens einen Zapfen und eine den Zapfen aufnehmende Zapfenaufnahme zum Verhindern einer Drehbewegung des Schiebeelementes um den Schalthebel, insbesondere um eine Längserstreckungsachse des Schalthebels, ausgebildet sind. Das Verdrehsicherungselement sowie das Verdrehsicherungs-Gegenelement können weiter bevorzugt eine der vorstehend beschriebenen Ausführungsformen aufweisen. Dadurch lassen sich die wie vorstehend beschriebenen Vorteile gleichfalls erreichen.

Weiter bevorzugt bildet die Zapfenaufnahme in dem Schiebeelement einen sich in Aufnahmerichtung des Zapfens erstreckenden Schacht aus, welcher einen Durchlass durch das Schiebeelement ausformt oder welcher einen Schachtboden aufweist, der in jeder eine vorbestimmte Funktion auslösende Stellung des Schalthebels zu dem Zapfen beabstandet, mit anderen Worten berührungsfrei ist. Eine solche vorbestimmte Funktion auslösende Stellung kann beispielsweise eine Stellung sein, nach Einnehmen welcher eine Auswahl einer dieser Stellung zugeordneten Fahrstufe erfolgt und signaltechnisch übermittelt wird. Ein in jeder der Stellungen des Schalthebels zwischen dem Zapfen und dem Schachtboden ausgeformter minimaler Abstand weist somit einen Wert größer als Null auf.

Vorzugsweise weist das Schiebeelement wenigstens ein signalgebendes Element einer Positionserfassungseinrichtung zum Erfassen einer Schalthebelposition, eine Rastkontur einer Rastiereinrichtung zum Rastieren des Schalthebels oder einen Anschluss für ein Kraftübertragungselement einer Parksperreneinrichtung zum Ein- und/oder Auslegen einer Parksperre eines Kraftfahrzeuggetriebes auf. Dadurch lassen sich mittels des Schiebeelementes bzw. der Kopplungsvorrichtung verschiedenartige Einrichtungen mit der Schalthebelvorrichtung koppeln, wodurch eine mit einer Bewegung des Schalthebels der Schalthebelvorrichtung gewollte Funktion erzeugbar ist. Die Schalthebelvorrichtung kann dadurch einfach und mit einer geringen Anzahl an Bauteilen ausgebildet werden.

Nach einem verfahrensmäßigen Aspekt der vorliegenden Erfindung wird ein Verfahren zum Herstellen einer wie vorstehend beschriebenen Kopplungsvorrichtung vorgeschlagen, wobei das Verfahren einen Schritt des Bereitstellens des Schiebeelementes, einen Schritt des Bereitstellens der Führung und einen Schritt des In-Eingriff-Bringens des Schiebeelementes mit der Führung umfasst. Mittels dieses bevorzugten Verfahrens kann eine wie vorstehend beschriebene Kopplungsvorrichtung mit wenigen Verfahrensschritten bereitgestellt werden.

Weitere Merkmale und Vorteile der Erfindung ergeben sich aus der nachfolgenden Beschreibung von bevorzugten Ausführungsbeispielen der Erfindung, anhand der Figuren und Zeichnungen, die erfindungswesentliche Einzelheiten zeigen, und aus den Patentansprüchen. Die einzelnen Merkmale können je einzeln für sich oder zu mehreren in beliebiger Kombination bei einer bevorzugten Ausführungsform der Erfindung verwirklicht sein.

Bevorzugte Ausführungsbeispiele der Erfindung werden nachfolgend anhand der beigefügten Zeichnungen näher erläutert. Es zeigen:
- Fig. 1: eine perspektivische Seitenansicht einer Kopplungsvorrichtung nach einem bevorzugten Ausführungsbeispiel in einem einen Schalthebel aufnehmenden Zustand;
- Fig. 2 und 3: unterschiedliche schematische Seitenansichten der in Fig. 1 gezeigten Kopplungsvorrichtung mit dem Schalthebel;
- Fig. 4 und 5: jeweilige Querschnittsansichten der in Fig. 2 und 3 gezeigten Kopplungsvorrichtung entlang der Schnittlinien IV-IV bzw. V-V;
- Fig. 6: eine perspektivische Seitenansicht der in Fig. 1 gezeigten Kopplungsvorrichtung in einer ersten ausgelenkten Stellung des Schiebeelements;
- Fig. 7: eine perspektivische Seitenansicht der in Fig. 1 gezeigten Kopplungsvorrichtung in einer zweiten ausgelenkten Stellung des Schiebeelements; und
- Fig. 8: ein Ablaufdiagramm eines Verfahrens zum Herstellen einer Kopplungsvorrichtung nach einem bevorzugten Ausführungsbeispiel.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

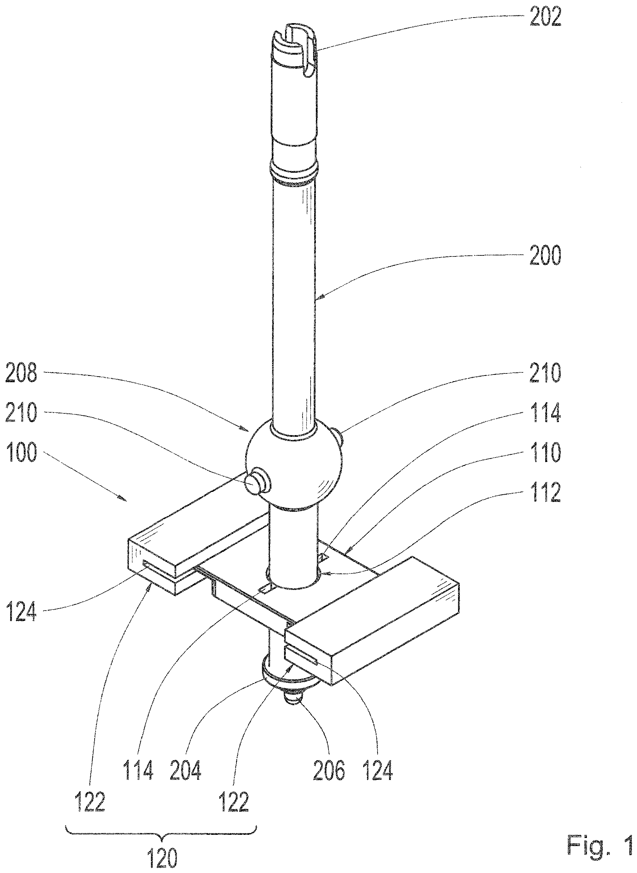

Fig. 1 zeigt eine perspektivische Seitenansicht einer Kopplungsvorrichtung 100 nach einem bevorzugten Ausführungsbeispiel in einem einen Schalthebel 200 aufnehmenden Aufnahmezustand. Die Kopplungsvorrichtung 100 umfasst ein Schiebeelement 110, welches scheibenartig ausgebildet ist, wobei gegenüberliegende Enden des Schiebeelementes 110 jeweils in eine Nut 124 eines Führungselementes 122 einer Führung 120 der Kopplungsvorrichtung 100 eingreifen. Die jeweiligen Enden des Schiebeelements bilden somit eine Feder einer Nut-Feder-Verbindung aus. Die jeweiligen Führungselemente 122 sind querschnittlich U-förmig ausgebildet, wobei ein zwischen den Schenkeln der U-Form liegender Freiraum die Nut 124 ausformt. Das Schiebeelement 110 wird von den jeweiligen Führungselementen 122 in eine Ebene definierende Erstreckungsrichtungen der jeweiligen Nut 124 bewegbar geführt. Das Schiebeelement 110 weist mittig eine Aufnahme 112 zur Aufnahme eines Abschnitts des Schalthebels 200 auf. Die Aufnahme 112 ist als Durchlass ausgebildet, wobei der Durchlass 112 gegenüberliegende Oberflächenseiten des Schiebeelementes 110 miteinander verbindet. Die Aufnahme 112 weist zwei gegenüberliegend angeordnete, jeweils als Verdrehsicherungselement ausgeformte Aussparungen bzw. Ausnehmungen 114 auf, welche sich von einer Oberflächenseite des Schiebeelementes 110 mit einer vorbestimmten Tiefe in das Schiebeelement 110 parallel zu dem Durchlass 112 erstecken. Bei diesem bevorzugten Ausführungsbeispiel erstrecken sich die Aussparungen 114 durch das Schiebeelement 110 und formen somit jeweils einen zu dem Durchlass 112 sich parallel erstreckenden weiteren Durchlass aus.

Der Schalthebel 200 ist im Wesentlichen stabförmig ausgebildet, wobei ein freies Ende 202 des Schalthebels 200 eine Anschlussstelle für einen Schaltknauf ausformt, über welchen der Schalthebel 200 von einem Benutzer betätigbar ist. Das dem freien Ende 202 in Längserstreckungsrichtung des Schalthebels 200 gegenüberliegende weitere freie Ende 204 durchragt das Schiebeelement 110 und beherbergt einen Rastierpin 206 einer nicht dargestellten Rastiervorrichtung. Zwischen den freien Enden 202, 204 des Schalthebels 200 ist ein Kugelgelenk 208 mit zwei sich gegenüberliegenden von dem Kugelgelenk 208 abragenden Kugelgelenkzapfen 210 angeordnet. Das Kugelgelenk 208 mit den Kugelgelenkzapfen 210 ist ausgebildet, in eine Kugelgelenklagerung eines nicht dargestellten Gehäuses einer den Schalthebel 200 beherbergenden nicht gezeigten Schalthebelvorrichtung einzugreifen, wodurch der Schalthebel 200 beweglich lagerbar ist. Die Kopplungsvorrichtung 100 ist dabei auf einer dem Benutzer abgewandten Seite des Kugelgelenks 208 zwischen dem Kugelgelenk 208 und dem Rastierpin 206 angeordnet. Diese Anordnung begünstigt eine für einen Benutzer des Schalthebels 200 verborgene Anordnung der Kopplungsvorrichtung 100 in dem Gehäuse der Schalthebelvorrichtung. Ferner können Bestandteile der Führung 120, im Einzelnen die Führungselemente 122, mit dem Gehäuse der Schalthebelvorrichtung ausgebildet werden. Dadurch kann eine Anzahl an notwendigen Einzelteilen zur Ausgestaltung der Kopplungsvorrichtung 100 sowie der Schalthebelvorrichtung verringert werden.

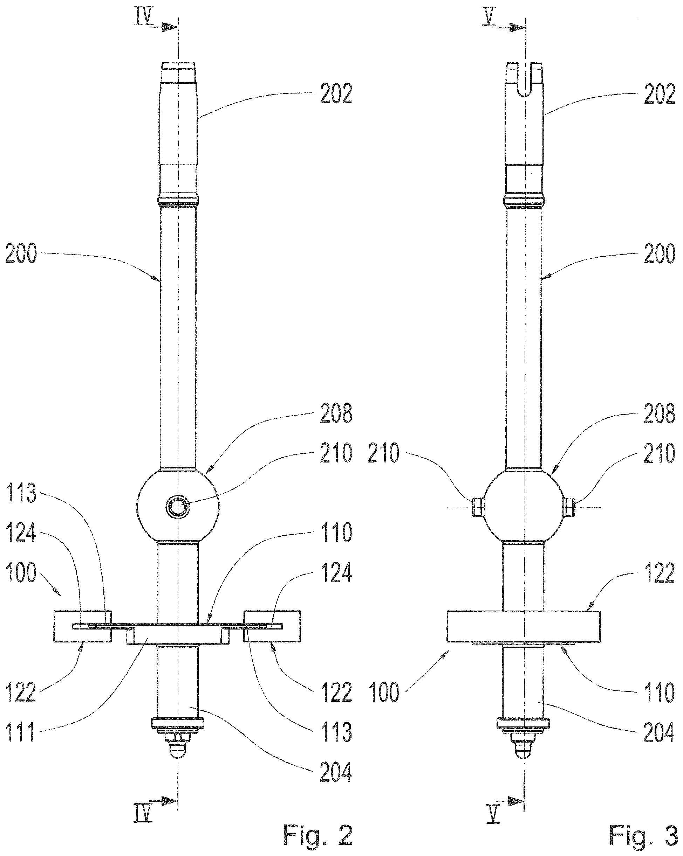

Fig. 2 zeigt eine erste Seitenansicht der in Fig. 1 gezeigten Kopplungsvorrichtung 100 in dem den Schalthebel 200 aufnehmenden Aufnahmezustand. Unter anderem zeigt Fig. 2 eine seitliche Außenkontur des Schiebeelementes 110. Das Schiebeelement 110 weist in einem mittleren Abschnitt einen Dickenbereich 111 auf, welcher die Aufnahme 112 und die Verdrehsicherungselemente 114 umfasst. Von dem Dickenbereich 111 erstrecken sich auf gegenüberliegenden Seiten jeweils flache Enden 113 des Schiebeelementes 110 in entgegengesetzte Richtungen, welche jeweils die in die Nut 124 eingreifende Feder ausformen. Das Schiebeelement 110 ist spiegelsymmetrisch zu einer durch einen Mittelpunkt des Schiebeelementes 110 durchgehenden und zu einer Aufnahmeachse der Aufnahme 112 parallel verlaufenden Symmetrieebene ausgebildet. Die freien Enden 113 des Schiebeelementes 110 greifen teilweise in die jeweilig zugeordnete Nut 124 der jeweiligen Führungselemente 122 ein. In der in Fig. 2 gezeigten Stellung befinden sich der Schalthebel 200 sowie das Schiebeelement 110 in einer Mittenstellung. In dieser Mittenstellung weisen die stirnseitigen von dem Schiebeelement 110 abweisenden Flächenabschnitte der jeweiligen freien Enden 113 einen vorbestimmten Abstand zu einem Grund bzw. Boden der die jeweilige Nut 124 ausbildende querschnittliche U-Form der Führungselemente 122 auf. Dadurch ist das Schiebeelement 110 in Richtung der jeweiligen Führungselemente 122 bewegbar. Der jeweilige Grund der die Nut 124 ausbildenden U-Form der jeweiligen Führungselemente 122 bildet dabei einen Stopp für die Bewegung des Schiebeelementes 110 aus. Mit anderen Worten ist die Bewegung des Schiebeelementes 110 in Richtung des jeweiligen Führungselementes 122 begrenzt. Das Schiebeelement 110 kann dabei in Richtung des jeweiligen Führungselementes 122 so weit bewegt werden, bis das jeweilig freie Ende 113 des Schiebeelementes 110 an eine die Nut 124 begrenzende Wandung des Führungselementes 122 in Anlage gelangt bzw. an dieser Wandung anstößt, wobei die Wandung den Grund der U-Form des Führungselementes 122 ausbildet. Mittels Auswahl eines Ausmaßes der Nut bzw. einer Tiefe der Nut in dem jeweiligen Führungselement 122 kann eine Bewegung des Schiebeelementes 110 in Richtung des jeweiligen Führungselementes 122 bedarfsgerecht angepasst werden. In einem Anlagezustand des jeweiligen freien Endes 113 des Schiebeelementes 110 an dem jeweiligen Führungselement 122 nimmt das Schiebeelement 110 nach diesem bevorzugten Ausführungsbeispiel jeweils eine Endstellung ein. Die Endstellung des Schiebeelementes 110 korrespondiert dabei zu einer Endstellung des Schalthebels 200. In einen Bewegungsbereich des Schiebeelementes 110 von der gezeigten Mittenstellung bis zu einer jeweiligen vorbeschriebenen Endstellung werden die jeweiligen Enden 113 des Schiebeelementes 110 von den Führungselementen 122 jeweils wenigstens teilweise überlappt, wodurch eine Führung des Schiebeelementes 110 in Richtung der jeweiligen Führungselemente 122 realisierbar ist. Die mögliche Bewegung des Schiebeelementes 110 in Richtung der jeweiligen Führungselemente 122 bildet dabei eine erste Bewegungsachse für das Schiebeelement 110 aus.

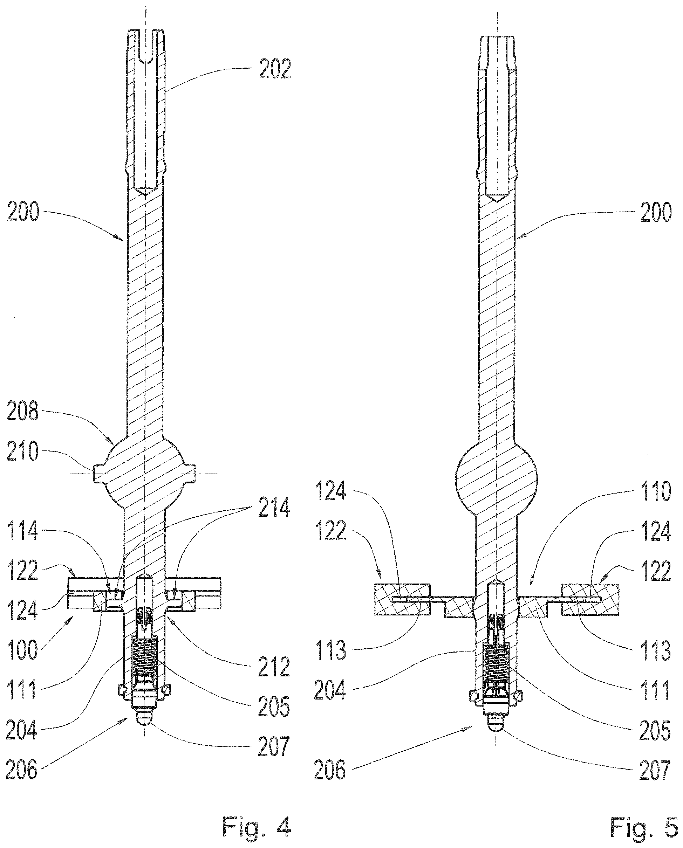

Fig. 3 zeigt eine weitere Seitenansicht der in Fig. 1 gezeigten Kopplungsvorrichtung 100 in dem den Schalthebel 200 aufnehmenden Aufnahmezustand. Fig. 4 zeigt eine Schnittansicht der Kopplungsvorrichtung 100 in Verbindung mit dem Schalthebel 200 aus Fig. 2 entlang der Schnittlinie IV-IV. Mit den Figuren 3 und 4 werden die relativen Ausmaße des jeweiligen Führungselementes 122 zu dem Schiebeelement 110 gezeigt. Das Führungselement 122 weist entlang der zweiten Bewegungsachse des Schiebeelementes 122 ein breiteres Ausmaß als das Schiebeelement 110 auf. Dadurch kann eine führende Bewegung des Schiebeelementes 110 entlang einer orthogonal zu der vorstehend vorbeschriebenen ersten Bewegungsachse verlaufende zweite Bewegungsachse sichergestellt werden. Die erste und zweite Bewegungsachse bilden dabei eine Bewegungsebene für das Schiebeelement 110 aus, entlang welcher das Schiebeelement 110 relativ zu der Führung 120 bzw. den jeweiligen Führungselementen 122 zweidimensional bewegbar ist.

Fig. 4 zeigt ferner sowie eine mit der Kopplungsvorrichtung 100 und dem Schalthebel 200 ausgebildete Verdrehsicherung. Das Dickenelement 111 des Schiebeelementes 110 nimmt in der Aussparung 114 einen mit dem Schalthebel 200 einteilig ausgeformten Sicherungszapfen 214 auf. Der Sicherungszapfen 214 bildet ein Verdrehsicherungs-Gegenelement aus, welches in Eingriff mit dem Verdrehsicherungselement 114, welches durch die als Durchlass ausgeformte Aussparung 114 ausgebildet ist, steht. Der Sicherungszapfen 214 erstreckt sich orthogonal zu der Längserstreckungsachse des Schalthebels 200 und in dem gezeigten Aufnahmezustand parallel zu der zweiten Bewegungsachse des Schiebeelementes 110. Der Sicherungszapfen 214 ragt dabei von einem weiteren Kugelgelenk 212 ab, welches einteilig mit dem Schalthebel 200 ausgeformt ist. Die Aufnahme 112 bildet ein Kugelgelenklager für das weitere Kugelgelenk 212 in Form eines Negativs des weiteren Kugelgelenks 212 ab. Die Verdrehsicherung gewährleistet kann eine verkantungsfreie Relativbewegung des aufgenommenen Abschnitts des Schalthebels 200 in der Aufnahme 112 zu dem Schiebeelement 110 bei Betätigung des Schalthebels 200. Der Eingriff des Sicherungszapfens 214 in der Aussparung 114 verhindert dabei eine Drehbewegung des Schiebeelementes 110 um die Längserstreckungsachse des Schalthebels 200. Ferner ist der Sicherungszapfen 214 in der Verdrehsicherung 114 um seine Längserstreckungsachse rotierbar. Des Weiteren ist der Sicherungszapfen 214 in der als Durchlass ausgeformten Verdrehsicherung 114 entlang einer den Durchlass aufweisenden Durchlassebene bewegbar. Dadurch kann einer in der Führung 120 in verschiedenen Richtungen möglichen Verkantung des Schiebeelementes 110 entgegengewirkt werden. Somit kann eine geführte Bewegung des Schiebeelementes 110 verkantungsfrei gewährleistet werden.

Nach einem nicht gezeigten Ausführungsbeispiel kann die Aussparung bzw. Ausnehmung 114 alternativ zu der vorstehend beschriebenen Ausbildung als Durchlass einen Schacht mit einem Schachtboden ausformen, welcher der Öffnung des Schachts zur Aufnahme des Sicherungszapfens 214 gegenüberliegt. Ein Abstand zwischen der Öffnungsebene, in welcher die Schachtöffnung angeordnet ist, und dem Schachtboden definiert dabei eine Schachttiefe, welche bedarfsgerecht anpassbar ist. Die Schachttiefe ist dabei derart gewählt, dass der Sicherungszapfens 214 in dem Schacht 114 entlang einer die Schachtöffnung und den Schachtboden kreuzenden Ebene bewegbar ist. Dadurch kann gleichfalls eine entsprechende verkantungsfreie Bewegung des Schiebeelements 110 gewährleistet werden.

Der Rastierpin 206 des gezeigten bevorzugten Ausführungsbeispiels ist in einer Bohrung aufgenommen, welche stirnseitig an dem weiteren Ende 204 ausgebildet ist und sich parallel zu der Längserstreckungsachse des Schalthebels 200 erstreckt. Der Rastierpin 206 ragt mit einem Kugelkopf 207 aus der Bohrung heraus. Der Rastierpin 206 ist in der Bohrung federelastisch mittels einer in der Bohrung zwischen dem Kugelkopf 207 und einem diesem gegenüberliegenden Bohrungsende angeordneten Druckfeder 205 gelagert. Dadurch kann der Rastierpin 206 entlang einer vorbestimmt ausgeformten Rastkontur federvorgespannt entlang gleiten. Der Rastierpin 206 und die Bohrung können eine übliche Ausgestaltung aufweisen, wie beispielhaft in der Druckschrift DE 103 44 287 beschrieben.

Fig. 5 zeigt eine Schnittansicht der in Fig. 3 gezeigten Kopplungsvorrichtung 100 mit dem Schalthebel 200 entlang der Schnittlinie V-V. In der mit dieser Figur gezeigten Stellung befinden sich der Schalthebel 200 sowie das Schiebeelement 110 in einer wie vorstehend beschriebenen Mittenstellung. Dabei ist das Schiebeelement 110 relativ zu der Führung 120 derart angeordnet, dass die freien Enden 113 des Schiebeelementes 110 jeweils einen vorbestimmten Abstand zu dem Grund der jeweils zugeordneten U-förmig ausgebildeten Nut 124 aufweisen. Das Schiebeelement 110 und somit der Schalthebel 200 sind entlang der ersten Bewegungsachse in entgegengesetzte Bewegungsrichtungen frei bewegbar.

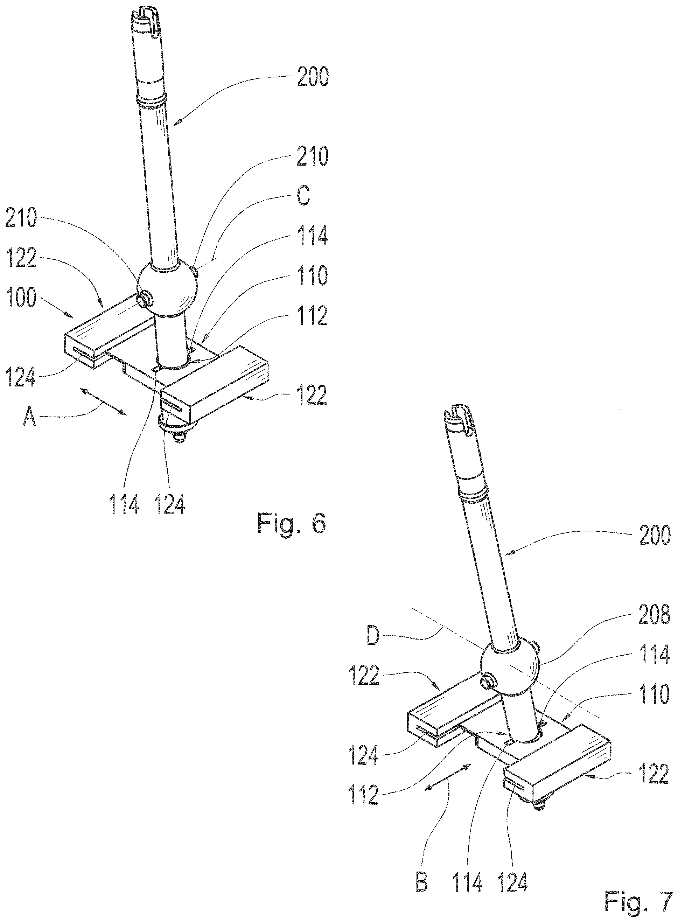

Fig. 6 zeigt die in Fig. 1 gezeigte Kopplungsvorrichtung 100 mit dem Schalthebel 200 in einer ersten ausgelenkten Stellung entlang der ersten Bewegungsachse A des Schiebeelementes 110. Der Schalthebel 200 ist dabei um eine durch die Kugelgelenkzapfen 210 ausgeformte Drehachse C vorbestimmt verschwenkt bzw. gedreht. Mittels des Eingriffs des in der Aufnahme 112 aufgenommenen Abschnitts des Schalthebels 200 ist das Schiebeelement 110 entlang der ersten Bewegungsachse A zwangsbewegt. Dabei verläuft die erste Bewegungsachse A senkrecht zu der Längserstreckungsrichtung der die jeweiligen freien Enden 113 des Schiebeelementes 110 aufnehmende Nuten 124 der Führung 120. Die in der Aussparung 114 aufgenommenen Sicherungszapfen 214 wirken dabei gleichfalls als Drehzapfen, die eine weitere Drehachse ausformen, um welche sich der in der Aufnahme 112 aufgenommene Abschnitt des Schalthebels 200 relativ zu dem Schiebeelement 110 bewegt. Dadurch wird einer Verkantung des Schiebeelementes 110 in der Führung 120 in einer Drehrichtung um die Drehachse der Sicherungszapfen 214 entgegengewirkt. Die kugelgelenkartige Ausgestaltung des in der Aufnahme 112 aufgenommenen Abschnitts des Schalthebels 200 unterstützt dabei eine Vermeidung der Verkantung des Schiebelementes 110 zu der Führung 120 um die durch die Sicherungszapfen 214 ausgeformte Drehachse.

Fig. 7 zeigt die in Fig. 1 gezeigte Kopplungsvorrichtung 100 mit dem Schalthebel 200 in einer zweiten ausgelenkten Stellung entlang der zweiten Bewegungsachse B. Die zweite Bewegungsachse B verläuft orthogonal zu der in Fig. 6 gezeigten ersten Bewegungsachse A, wobei sich die zweite Bewegungsachse B parallel zu einer Längserstreckungsachse der jeweiligen Nuten 124 der Führung 120 erstreckt. Der Schalthebel 200 ist dabei um eine zweite Drehachse D verschwenkt, wobei die zweite Drehachse D orthogonal zu der ersten Drehachse C verläuft und sich durch den Mittelpunkt des Kugelgelenkes 208 erstreckt. Eine solche Drehbewegung kann beispielsweise mittels einer kardanischen Lagerung realisiert werden. Die Bewegung des Schalthebels 200 um die zweite Drehachse D bewirkt eine Verschiebung des Schiebeelementes 110 entlang der jeweiligen Nuten 124 der jeweiligen Führungselemente 122 bzw. entlang der zweiten Bewegungsachse B. Die vorstehend beschriebene Ausgestaltung der Aufnahme 112 mit den Aussparungen 114, welche sich in Eingriff mit den Sicherungszapfen 214 und dem kugelgelenkartigen Abschnitt des Schalthebels 200 befinden, begünstigen dabei eine Vermeidung einer Verkantung des Schiebeelementes 110 relativ zu der Führung 120 in den jeweiligen Nuten 124.

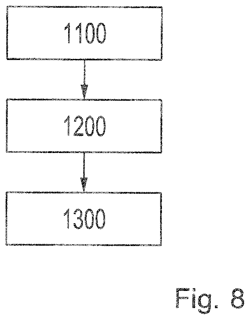

Fig. 8 zeigt ein Ablaufdiagramm eines Verfahrens zum Herstellen einer Kopplungsvorrichtung, insbesondere einer Kopplungsvorrichtung nach einem der vorstehend bevorzugt beschriebenen Ausführungsbeispiele. Das Verfahren umfasst einen Schritt 1100 des Bereitstellens des Schiebeelementes, einen Schritt 1200 des Bereitstellens der Führung und einen Schritt 1300 des In-Eingriff-Bringens des Schiebeelementes mit der Führung. Die Schritte des Bereitstellens sind nicht zwangsläufig in der vorstehend beschriebenen Reihenfolge durchzuführen. Der Schritt des Bereitstellens des Schiebeelementes kann durchaus nach dem Schritt des Bereitstellens der Führung oder gleichzeitig mit dem Schritt des Bereitstellens der Führung erfolgen. Nach einem bevorzugten Ausführungsbeispiel kann die Führung mit einem Gehäuse einer Schalthebelvorrichtung, welche den Schalthebel beherbergt, ausgebildet sein oder mit dem Gehäuse bereitgestellt werden. Das Gehäuse kann dabei zweiteilig ausgeformt sein, wobei jedes Gehäuseteil eines der vorstehend beschriebenen Führungselemente aufweist. Der Schritt des Bereitstellens der Führung kann dabei einen Schritt des Bereitstellens eines Gehäuseteils einer Schalthebelvorrichtung definieren, wobei der Schritt des In-Eingriff-Bringens des Schiebeelementes mit der Führung zu einem Schritt des Einsetzens eines der freien Enden des Schiebeelementes in die Nut des Führungselementes korrespondiert. Der Schritt des In-Eingriff-Bringens kann ferner einen Schritt des Montierens des zweiten Gehäuseteils aufweisend eines der Führungselemente 122 mit dem ersten Gehäuseteil aufweisend das andere Führungselement umfassen, wobei das weitere freie Ende 113 des Schiebeelementes in die Nut des Führungselementes des zweiten Gehäuseteils eingesetzt wird.

Unter Bezugnahme auf die Fig. 1-7 werden Ausführungsbeispiele der vorliegenden Erfindung, Varianten und weitere Aspekte im Folgenden zusammengefasst und mit anderen Worten erläutert.

Gemäß einem Ausführungsbeispiel kann die Kopplungsvorrichtung 100 vorgesehen sein, eine Rastiereinrichtung für den Schalthebel auszuformen. Bei diesem bevorzugten Ausführungsbeispiel können wenigstens ein in Eingriff stehendes freies Ende des Schiebeelementes mit einem zugeordneten Führungselement eine Rastkontur ausbilden, welche entlang der jeweiligen Bewegungsachse wenigstens einen Rastberg und mehrere mit dem wenigstens einen Rastberg in Eingriff bringbare Rasttäler oder wenigstens ein Rasttal und mehrere mit dem wenigstens einen Rasttal in Eingriff bringbare Rastberge aufweisen, wobei in jeder der möglichen Stellungen des Schalthebels entlang den jeweiligen Bewegungsachsen ein Rastberg und ein Rasttal in Eingriff stehen. Der Rastberg bildet dabei vorzugsweise eine Negativform des Rasttales aus. Dadurch kann eine konstruktiv einfach ausgestaltete Rasteinrichtung für den Schalthebel einer Schalthebelvorrichtung bereitgestellt werden. Ferner kann das weitere freie Ende des Schalthebels von der Aufnahme des Schiebeelementes aufgenommen sein. Damit kann die Schalthebelvorrichtung entlang einer Längserstreckungsrichtung des von der Schalthebelvorrichtung gelagerten Schalthebels kompakt ausgebildet werden.

Gemäß einem Ausführungsbeispiel kann das Schiebeelement 110 einen Anschluss für ein Kraftübertragungselement aufweisen, welches mit einer Parksperre eines Gangwechselgetriebes gekoppelt oder koppelbar ist. Mittels Bewegung des Schiebeelementes entlang einer der Bewegungsachsen kann das Kraftübertragungselement derart zwangsbewegt werden, dass die Parksperre des Gangwechselgetriebes ein- und/oder auslegbar ist. Beispielsweise kann dies im Rahmen einer Notentriegelungseinrichtung erfolgen, bei welcher die Parksperre mechanisch auslegbar vorzusehen ist.

Gemäß einem Ausführungsbeispiel kann das Schiebeelement wenigstens ein signalgebendes Element aufweisen, welches in einem Wirkzusammenhang mit wenigstens einem Signalerfassungselement abhängig von einer Position des Schiebeelementes bringbar ist. Bei dem signalgebenden Element kann es sich beispielsweise um einen Magneten und bei dem Signalerfassungselement um ein magnetfeldempfindliches Element handeln, wobei das magnetfeldempfindliche Element ein Signal erfasst und ausgibt, sofern ein Magnetfeld des Magnetelements das magnetfeldempfindliche Element beaufschlagt. Auf diese Weise kann mittels der Kopplungsvorrichtung eine Positionserfassungsvorrichtung für den Schalthebel einer Schalthebelvorrichtung bereitgestellt werden. Eine Anordnung des wenigstens einen signalgebenden Elements und des wenigstens einen Signalerfassungselements sind vorzugsweise derart zu wählen, dass das Signalerfassungselement dann ein Positionserfassungssignal ausgibt, wenn der Schalthebel eine vorbestimmte Stellung eingenommen hat und/oder die vorbestimmte Stellung einnehmen wird.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Kopplungsvorrichtung
- 110: Schiebeelement
- 111: Dickenelement
- 112: Aufnahme
- 113: freies Ende
- 114: Verdrehsicherungselement
- 120: Führung
- 122: Führungselement
- 124: Nut

- 200: Schalthebel
- 202: freies Ende
- 204: weiteres freies Ende
- 205: Druckfeder
- 206: Rastierpin
- 207: Kugelkopf
- 208: Kugelgelenk
- 210: Kugelgelenkzapfen
- 212: weiteres Kugelgelenk
- 214: Sicherungszapfen

- 1100: Schritt des Bereitstellens
- 1200: Schritt des Bereitstellens
- 1300: Schritt des in Eingriff Bringens

- A: erste Bewegungsachse
- B: zweite Bewegungsachse
- C: erste Drehachse
- D: zweite Drehachse

## Patentansprüche

1. Kopplungsvorrichtung (100) für einen Schalthebel (200) einer Kraftfahrzeug-Schalthebelvorrichtung, wobei die Kopplungsvorrichtung (100) umfasst
ein bewegbares Schiebeelement (110) mit einer Aufnahme (112) zum Aufnehmen eines Abschnitts des Schalthebels (200); und
eine Führung (120) zum Führen einer zweidimensionalen Bewegung des Schiebeelements (110), wobei die Führung (120) wenigstens ein Führungselement (122) aufweist, mit welchem das Schiebeelement (110) in Eingriff steht; und
das Schiebeelement (110) in dem Eingriffszustand entlang zweier zueinander unterschiedlicher Bewegungsachsen (A, B) zu dem wenigstens einen Führungselement (122) bewegbar ist, **dadurch gekennzeichnet, dass** die Führung (120) ein weiteres Führungselement (122) aufweist, mit welchem das Schiebeelement (110) in Eingriff steht, wobei das Führungselement (122) und das weitere Führungselement (122) zueinander gegenüberliegend unter Zwischenlage des Schiebeelements (110) angeordnet sind..

2. Kopplungsvorrichtung (100) nach Anspruch 1, **dadurch gekennzeichnet, dass** die beiden Bewegungsachsen (A, B) eine planare Bewegungsebene für die Bewegungen des Schiebeelements (110) definieren.

3. Kopplungsvorrichtung (100) nach Anspruch 1 oder 2, **dadurch gekennzeichnet, dass** sich die beiden Bewegungsachsen (A, B) orthogonal zueinander erstrecken.

4. Kopplungsvorrichtung (100) nach einem der vorherigen Ansprüche, **dadurch gekennzeichnet, dass** das wenigstens eine Führungselement (122) eine Komponente ausgewählt aus einer Nut (124) und einer Feder (113) einer Nut-Feder-Verbindung und das Schiebeelement (110) die andere Komponente ausgewählt aus der Nut (124) und der Feder (113) der Nut-Feder-Verbindung ausbilden.

5. Kopplungseinrichtung (100) nach Anspruch 1, **dadurch gekennzeichnet, dass** das Führungselement (122) und das weitere Führungselement (122) jeweils einen Stopp aufweisen, welche sich entlang einer der beiden Bewegungsachsen (A, B) zum Begrenzen einer Bewegung des Schiebeelements (110) gegenüberliegen.

6. Kopplungseinrichtung (100) nach einem der vorherigen Ansprüche, **dadurch gekennzeichnet, dass** die Aufnahme (112) ein Verdrehsicherungselement (114) zum Eingriff mit einem Verdrehsicherungs-Gegenelement (214) des Schalthebels (200) aufweist.

7. Kopplungsvorrichtung (100) nach Anspruch 6, **dadurch gekennzeichnet, dass** das Verdrehsicherungselement durch einen Durchlass (114) ausgebildet ist, welcher sich parallel zu der Aufnahme (112) das Schiebeelement (110) durchquerend erstreckt.

8. Schalthebelvorrichtung für ein Kraftfahrzeug umfassend einen wenigstens zweidimensional bewegbar gelagerten Schalthebel (200), und eine Kopplungsvorrichtung (100) nach einem der vorherigen Ansprüche, wobei ein freier Abschnitt des Schalthebels (200) von der Aufnahme (112) des Schiebeelements (110) aufgenommen ist, wobei die Aufnahme (112) ausgebildet ist, eine entlang der jeweiligen Bewegungsachse (A, B) gerichtete Bewegungskraft zwischen dem Schalthebel (200) und dem Schiebeelement (110) zu übertragen.

9. Schalthebelvorrichtung nach Anspruch 8, **dadurch gekennzeichnet, dass** die Schalthebelvorrichtung ein Gehäuse umfasst, welches die Führung (120) ausbildet.

10. Schalthebelvorrichtung nach Anspruch 8 oder 9, **dadurch gekennzeichnet, dass** der Schalthebel (200) ein Verdrehsicherungs-Gegenelement (214) aufweist, welches mit einem Verdrehsicherungselement (114) des Schiebeelements (110) in Eingriff steht, wobei das Verdrehsicherungs-Gegenelement und das Verdrehsicherungselement durch wenigstens einen Zapfen (214) und einen den Zapfen (214) aufnehmende Zapfenaufnahme (114) zum Verhindern wenigstens einer Drehbewegung des Schiebeelements (110) um den Schalthebel (200) ausgebildet sind.

11. Schalthebelvorrichtung nach Anspruch 10, **dadurch gekennzeichnet, dass** die Zapfenaufnahme (114) in dem Schiebeelement (110) einen sich in Aufnahmerichtung des Zapfens (214) erstreckenden Schacht ausformt, welcher einen Durchlass durch das Schiebeelement (110) ausbildet oder welcher einen Schachtboden aufweist, der in jeder eine vorbestimmte Funktion auslösende Stellung des Schalthebels (200) zu dem Zapfen (214) beabstandet ist.

12. Schalthebelvorrichtung nach einem der Ansprüche 7 bis 11, **dadurch gekennzeichnet, dass** das Schiebeelement (110) wenigstens ein signalgebendes Element einer Positionserfassungseinrichtung zum Erfassen einer Schalthebelposition, eine Rastkontur einer Rastiereinrichtung zum Rastieren des Schalthebels (200) oder einen Anschluss für ein Kraftübertragungselement einer Parksperreneinrichtung zum Ein- und/oder Auslegen einer Parksperre eines Kraftfahrzeuggetriebes aufweist.

13. Verfahren zum Herstellen einer Kopplungsvorrichtung nach einem der Ansprüche 1 bis 7, wobei das Verfahren umfasst einen Schritt (1100) des Bereitstellens des Schiebeelements, einen Schritt (1200) des Bereitstellens der Führung und einen Schritt (1300) des in Eingriff Bringens des Schiebeelements mit der Führung.

## Claims

1. Coupling apparatus (100) for a gearshift lever (200) of a motor vehicle gearshift lever apparatus, the coupling apparatus (100) comprising
a movable sliding element (110) with a receptacle (112) for receiving a section of the gearshift lever (200); and a guide (120) for guiding a two-dimensional movement of the sliding element (110), the guide (120) having at least one guide element (122), with which the sliding element (110) is in engagement;
and
it being possible, in the engaged state, for the sliding element (110) to be moved along two movement axes (A, B), which are different from one another, with respect to the at least one guide element (122), **characterized**
**in that** the guide (120) has a further guide element (122), with which the sliding element (110) is in engagement, the guide element (122) and the further guide element (122) being arranged so as to lie opposite one another with the sliding element (110) being positioned in between.

2. Coupling apparatus (100) according to Claim 1, **characterized in that** the two movement axes (A, B) define a planar movement plane for the movements of the sliding element (110).

3. Coupling apparatus (100) according to Claim 1 or 2, **characterized in that** the two movement axes (A, B) extend orthogonally with respect to one another.

4. Coupling apparatus (100) according to one of the preceding claims, **characterized in that** the at least one guide element (122) configures one component selected from a groove (124) and a tongue (113) of a tongue and groove connection, and the sliding element (110) configures the other component selected from the groove (124) and the tongue (113) of the tongue and groove connection.

5. Coupling apparatus (100) according to Claim 1, **characterized in that** the guide element (122) and the further guide element (122) have in each case one stop, which stops lie opposite one another along one of the two movement axes (A, B) in order to limit a movement of the sliding element (110).

6. Coupling apparatus (100) according to one of the preceding claims, **characterized in that** the receptacle (112) has an anti-rotation safeguard element (114) for engagement with an anti-rotation safeguard counter-element (214) of the gearshift lever (200).

7. Coupling apparatus (100) according to Claim 6, **characterized in that** the anti-rotation safeguard element is configured by way of a passage (114) which extends parallel to the receptacle (112) in a manner which crosses through the sliding element (110).

8. Gearshift lever apparatus for a motor vehicle comprising a gearshift lever (200) which is mounted such that it can be moved at least in a two-dimensional manner, and a coupling apparatus (100) according to one of the preceding claims, a free section of the gearshift lever (200) being received by the receptacle (112) of the sliding element (110), the receptacle (112) being configured to transmit a movement force between the gearshift lever (200) and the sliding element (110), which movement force is directed along the respective movement axis (A, B).

9. Gearshift lever apparatus according to Claim 8, **characterized in that** the gearshift lever apparatus comprises a housing which configures the guide (120).

10. Gearshift lever apparatus according to Claim 8 or 9, **characterized in that** the gearshift lever (200) has an anti-rotation safeguard counter-element (214) which is in engagement with an anti-rotation safeguard element (114) of the sliding element (110), the anti-rotation safeguard counter-element and the anti-rotation safeguard element being configured by way of at least one pin (214) and one pin receptacle (114) which receives the pin (214), in order to prevent at least one rotational movement of the sliding element (110) around the gearshift lever (200).

11. Gearshift lever apparatus according to Claim 10, **characterized in that** the pin receptacle (114) in the sliding element (110) forms a shaft which extends in the receiving direction of the pin (214) and configures a passage through the sliding element (110) or has a shaft bottom which is spaced apart from the pin (214) in every position of the gearshift lever (200), which position triggers a predefined function.

12. Gearshift lever apparatus according to one of Claims 7 to 11, **characterized in that** the sliding element (110) has at least one signal-transmitting element of a position detection device for the detection of a gearshift lever position, a latching contour of a latching device for latching the gearshift lever (200), or a connector for a force transmission element of a parking lock device for engaging and/or disengaging a parking lock of a motor vehicle transmission.

13. Method for producing a coupling apparatus according to one of Claims 1 to 7, the method comprising a step (1100) of providing of the sliding element, a step (1200) of providing of the guide, and a step (1300) of bringing of the sliding element into engagement with the guide.

## Revendications

1. Dispositif d'accouplement (100) destiné à un levier de vitesses (200) d'un dispositif de levier de vitesses d'un véhicule automobile, le dispositif d'accouplement (100) comprenant
un élément coulissant mobile (110) pourvu d'un logement (112) destiné à recevoir une partie du levier de vitesses (200) ; et
un guide (120) destiné à guider un mouvement bidimensionnel de l'élément coulissant (110), le guide (120) comportant au moins un élément de guidage (122) avec lequel l'élément coulissant (110) est en engagement ; et
l'élément coulissant (110) étant mobile à l'état engagé le long de deux axes de déplacement (A, B) différents l'un de l'autre vers l'au moins un élément de guidage (122), **caractérisé en ce que**,
le guide (120) comporte un autre élément de guidage (122) avec lequel l'élément coulissant (110) est en engagement, l'élément de guidage (122) et l'autre élément de guidage (122) étant disposés en face l'un de l'autre avec interposition de l'élément coulissant (110) .

2. Dispositif d'accouplement (100) selon la revendication 1, **caractérisé en ce que** les deux axes de mouvement (A, B) définissent un plan de mouvement planaire pour les mouvements de l'élément coulissant (110) .

3. Dispositif d'accouplement (100) selon la revendication 1 ou 2, **caractérisé en ce que** les deux axes de déplacement (A, B) s'étendent orthogonalement l'un à l'autre.

4. Dispositif d'accouplement (100) selon l'une des revendications précédentes, **caractérisé en ce que** l'au moins un élément de guidage (122) est un composant choisi parmi une rainure (124) et une languette (113) d'une liaison à languette et rainure et l'élément coulissant (110) est l'autre composant choisi parmi la rainure (124) et la languette (113) de la liaison à languette et rainure.

5. Dispositif d'accouplement (100) selon la revendication 1, **caractérisé en ce que** l'élément de guidage (122) et l'autre élément de guidage (122) comportent chacun une butée, lesquelles butées se font face suivant l'un des deux axes de déplacement (A, B) pour limiter un déplacement de l'élément coulissant (110) .

6. Dispositif d'accouplement (100) selon l'une des revendications précédentes, **caractérisé en ce que** le logement (112) comporte un élément anti-rotation (114) destiné à s'engager avec un élément anti-rotation homologue (214) du levier de vitesses (200).

7. Dispositif d'accouplement (100) selon la revendication 6, **caractérisé en ce que** l'élément anti-rotation est formé par un passage (114) qui s'étend parallèlement au logement (112) en traversant l'élément coulissant (110).

8. Dispositif de levier de vitesses destiné à un véhicule automobile et comprenant un levier de vitesses (200) monté de manière mobile dans au moins en deux dimensions, et un dispositif d'accouplement (100) selon l'une des revendications précédentes, une partie libre du levier de vitesses (200) étant reçue par le logement (112) de l'élément coulissant (110), le logement (112) étant conçu pour transmettre une force de mouvement dirigée suivant l'axe de mouvement respectif (A, B) entre le levier de changement de vitesse (200) et l'élément coulissant (110).

9. Dispositif de levier de vitesses selon la revendication 8, **caractérisé en ce que** le dispositif de levier de vitesses comprend un boîtier qui forme le guide (120).

10. Dispositif de levier de vitesses selon la revendication 8 ou 9, **caractérisé en ce que** le levier de vitesses (200) comporte un élément anti-rotation homologue (214) qui est en engagement avec un élément anti-rotation (114) de l'élément coulissant (110), l'élément anti-rotation homologue et l'élément anti-rotation étant formés par au moins une broche (214) et un logement de broche (114) recevant la broche (214) pour empêcher au moins un mouvement de rotation de l'élément coulissant (110) autour du levier de commutation (200).

11. Dispositif de levier de vitesses selon la revendication 10, **caractérisé en ce que** le logement de broche (114) forme dans l'élément coulissant (110) un puits qui s'étend dans la direction de logement de la broche (214) et qui forme un passage à travers l'élément coulissant (110) ou qui comporte un fond de puits qui est espacé de la broche (214) dans chaque position du levier de vitesses (200) qui déclenche une fonction prédéterminée.

12. Dispositif de levier de vitesses selon l'une des revendications 7 à 11, **caractérisé en ce que** l'élément coulissant (110) comporte au moins un élément générateur de signal d'un moyen de détection de position destiné à détecter une position de levier de vitesses, un contour d'encliquetage d'un moyen d'encliquetage destiné à l'encliquetage du levier de vitesses (200) ou un raccord destiné à un élément de transmission de force d'un moyen de frein de stationnement destiné à engager et/ou désengager un frein de stationnement d'une transmission de véhicule automobile.

13. Procédé de fabrication d'un dispositif d'accouplement selon l'une des revendications 1 à 7, le procédé comprenant une étape (1100) de fourniture de l'élément coulissant, une étape (1200) de fourniture du guide et une étape (1300) d'engagement de l'élément coulissant avec le guide.
